# EUROPÄISCHE PATENTSCHRIFT

(11) **EP 3 694 960 B1**
(45) Veröffentlichungstag und Bekanntmachung des Hinweises auf die Patenterteilung: **24.02.2021**
(21) Anmeldenummer: 18785953.3
(22) Anmeldetag: 11.10.2018
(51) Int. Cl.: C10N 30/00, C10N 40/04, F16H 57/04, C10M 133/06, C10M 133/08, C10M 141/06

(54) **SCHMIERSTOFFZUSAMMENSETZUNG SOWIE VERWENDUNG ZUR SCHMIERUNG EINES GETRIEBES**
LUBRICANT COMPOSITION AND USE FOR LUBRICATING A TRANSMISSION SYSTEM
COMPOSITION LUBRIFIANTE ET UTILISATION POUR LUBRIFIER UNE TRANSMISSION

(30) Priorität: 11.10.2017 DE 102017123614
(43) Veröffentlichungstag der Anmeldung: 19.08.2020
(73) Patentinhaber: Volkswagen AG, 38440 Wolfsburg (DE)
(72) Erfinder: FELDSCHER, Birte, 38102 Braunschweig (DE); FAHL, Dr. Jörg, 38444 Wolfsburg (DE); DENECKE, Roland, 38381 Jerxheim (DE)
(74) Vertreter: Gulde & Partner
(86) Internationale Anmeldenummer: PCT/EP2018/077803
(87) Internationale Veröffentlichungsnummer: WO 2019/073008

(56) Entgegenhaltungen:
- EP-A1- 1 233 054
- EP-A1- 3 060 638
- WO-A1-2017/149119
- US-A- 4 537 694
- US-A- 5 372 735

## Beschreibung

Die Erfindung betrifft eine Schmierstoffzusammensetzung, eine Verwendung der Schmierstoffzusammensetzung zur Schmierung eines Getriebes sowie ein Getriebe.

In der Automobiltechnik ist es bekannt, kraftübertragende Zahnräder in Getrieben, egal ob gerad- oder schrägverzahnt, zur Vermeidung von Verschleiß, zur Abfuhr der im Zahneingriff entstehenden Wärme, zur Herabsetzung der im Zahneingriff entstehenden Reibung sowie zur Reduzierung von Haftgleiteffekten zu schmieren, um deren Dauerhaltbarkeit und Funktionsfähigkeit zu gewährleisten.

Dabei erfolgt die Schmierung durch Tauch- oder Zwangsschmierung. Bei der Tauchschmierung tauchen die Zähne und Zahnflanken der Zahnräder infolge der Rotation der Zahnräder beim Betrieb in einen Ölsumpf ein und nehmen dabei die zur Schmierung notwendige Schmierstoffmenge auf. Hingegen wird bei der Zwangsschmierung der Schmierstoff durch aktive Beölungsmaßnahmen in den Zahneingriff der Zahnräder eingebracht.

Die hierfür verwendete Schmierstoffzusammensetzung muss in ihren physikalisch-chemischen Eigenschaften so beschaffen sein, dass die zu schmierenden Getriebezahnräder im Getrieberäderkasten ihre kraftübertragende Funktion sicher und dauerhaltbar ausüben können. Hierzu werden Schmier- beziehungsweise Getriebeöle, die dem oben beschriebenen Anwendungsfall entsprechen, derart formuliert, dass eine rheologisch geeignete Grundflüssigkeit (das sogenannte Grundöl) mit zahlreichen Wirkstoffen (den sogenannten Additiven) versetzt wird, die eine Eigenschaftsverbesserung des Grundöls herbeiführen. Zu den Grundölen gehören insbesondere Mineralöle, teilsynthetische und synthetische Öle sowie natürliche Öle.

Die Additive dienen beispielsweise zur Verbesserung des Lasttragevermögens und des Verschleißschutzes (Hochdruck- und Antiverschleißzusätze), des Schaumverhaltens (Schauminhibitoren), der Reibeigenschaften (Friction Modifier), zur Reduzierung von Haftgleiteffekten/Reibschwingungen sowie der Oxidations- und Korrosionsstabilität (Oxidationsinhibitoren, Metallpassivatoren, Rostinhibitoren). Weiterhin werden Dispergiermittel und Detergentien als Zusätze verwendet.

In Differentialgetrieben kommt es beispielsweise bei frontgetriebenen Kraftfahrzeugen in Kurvenfahrt zu brummenden Geräuschen im Bereich des Vorderwagens. Ausgelöst wird dieses Geräusch durch Reibschwingungen (stick-slip) zwischen Anlaufscheibenverbund und Kegelrädern des Getriebedifferenzials. Diese Geräusche werden durch eine Anbindung an die Karosserie zusätzlich verstärkt und stellen eine massive Beeinträchtigung des Fahrkomforts dar.

Die Fertigung der Anlaufscheiben, die üblicherweise aus Kunststoff bestehen, aus einem metallischen Werkstoff, beispielsweise Stahl, führt zu einer Reduzierung der Geräuschemissionen. Jedoch sind hierbei die relativ hohen Kosten für die Bereitstellung derartiger Anlaufscheiben nachteilig.

Bekannt ist es auch, Schmieröle für Differentialgetriebe mit Additiven zu versetzen. So wird in der US 20140342962 A1 R'N((CH2)₂CONHR")₂, eingesetzt, wobei jedoch keine zufriedenstellende Reduzierung der Geräusche erzielt werden konnte. In der US 4,849,119 werden Diamincarboxylate beschrieben, die als Additive für Motorenöle verwendet werden.

US 2798045 A offenbart Schmiermittel aufweisend ein Grundöl und unter anderem N-C₁₂₋₁₈-Alkylpropylendiaminoleat. In der US 5254277 A werden allgemein Schmiermittel beschrieben, die Hydroxylamin und Alkyldiamincarboxylate aufweisen. US5372735 und EP1233054 A1 offenbaren Getriebeschmierstoffe zur Geräuschreduktion enthaltend ethoxyliertes Talgamin und N-Oleyltrimethylendiamin.

Der Erfindung liegt nun die Aufgabe zugrunde, eine Schmierstoffzusammensetzung bereitzustellen, die Reibschwingungen in Getrieben unterbindet oder zumindest reduziert.

Diese Aufgabe wird durch eine Schmierstoffzusammensetzung nach Anspruch 1, eine Verwendung der Schmierstoffzusammensetzung nach Anspruch 9 und einem Getriebe nach Anspruch 10 gelöst.

Vorteilhafte Ausgestaltungen der Erfindung sind in den Unteransprüchen gekennzeichnet.

Die erfindungsgemäße Schmierstoffzusammensetzung weist ein Grundöl auf und ein Diaminalkanmonosalz mit der allgemeinen Struktur (I) 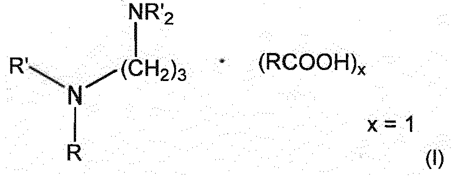
wobei R (Carbonsäure, Amin) eine ungesättigte Kohlenwasserstoff-Gruppe mit 16-24 C-Atomen ist, und
R' ein Wasserstoff, eine Kohlenwasserstoff-Gruppe mit 1 bis 4 C-Atomen oder eine Benzyl-Gruppe ist,
und/oder ein Triaminalkanmonosalz- oder disalz mit der allgemeinen Struktur (II) 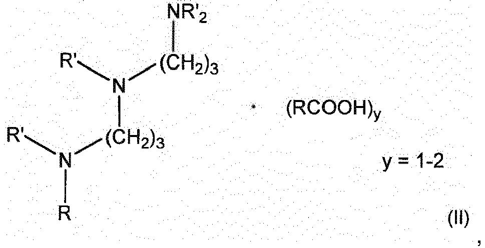
wobei R (Carbonsäure, Amin) eine Kohlenwasserstoff-Gruppe mit 12-24 C-Atomen, die gesättigt oder ungesättigt, linear oder verzweigt sein kann, ist, und
R' ein Wasserstoff, eine Kohlenwasserstoff-Gruppe mit 1 bis 4 C-Atomen oder eine Benzyl-Gruppe ist,
und ein ethoxyliertes Amin mit der allgemeinen Struktur (III), 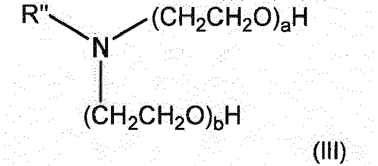
wobei R" eine Kohlenwasserstoffgruppe mit 8-22 C-Atomen, die gesättigt oder ungesättigt, linear oder verzweigt sein kann, ist und
a und b 2 bis 50 sind, also jeweils eine Zahl von 1 bis 25. Vorzugsweise sind a und b 2, d.h. jeweils 1. a und b können gleich oder ungleich sein, wobei die Verbindungen mit der allgemeinen Struktur (I) und/oder (II) 0,1 bis 0,5 Gew.% und die Verbindung mit der allgemeinen Struktur (III) 0,1 bis 0,5 Gew.% der Schmierstoffzusammensetzung aufweisen.

Erfindungsgemäß können genannte Verbindungen mit den allgemeinen Strukturen (I), (II) und (III) auch jeweils Mischungen darstellen, die durch Variation der Kettenlängen der Reste in den angegebenen Bereichen resultieren können.

Die Verbindungen mit der allgemeinen Struktur (I) und (II) werden mit dem ethoxylierten Amin mit der allgemeinen Struktur (III) kombiniert, da hierbei geringere Konzentrationen verwendet werden können, sodass bessere Materialverträglichkeiten, geringerer Einfluss auf andere Komponenten und eine geringere Verschlechterung der Schmierfähigkeit gegeben sind.

Vorzugsweise ist das Diaminalkanmonosalz mit der allgemeinen Struktur (I) N-(oleyl alkyl)-1,3-propandiamin-oleat (Armolube® 211 der Fa. Akzo-Nobel).

Vorzugsweise ist das Triaminalkanmono- oder disalz mit der allgemeinen Struktur (II) Talg dipropylentriamin-oleat (Armolube® 312 der Fa. Akzo-Nobel).

Vorzugsweise ist das ethoxlierte Amin mit der allgemeinen Struktur (III) Bis (2-hydroxylethyl) Talgamin (Ethomeen® T12 der Fa. Akzo-Nobel).

Vorzugsweise ist die Schmierstoffzusammensetzung ein Getriebeöl, vorzugsweise für ein Differentialgetriebe.

Gegenstand der Erfindung ist auch die Verwendung einer Schmierstoffzusammensetzung zur Schmierung eines Differentialgetriebes, umfassend ein Grundöl und ein Diaminalkanmonosalz mit der allgemeinen Struktur (I) wobei R (Carbonsäure, Amin) - eine Kohlenwasserstoff-Gruppe mit 12-24 C-Atomen, die gesättigt oder ungesättigt, linear oder verzweigt sein kann, sein kann und R' ein Wasserstoff, eine Kohlenwasserstoff-Gruppe mit 1 bis 4 C-Atomen oder eine Benzyl-Gruppe ist, und/oder ein Triaminalkanmonosalz oder -disalz mit der allgemeinen Struktur (II) wobei R (Carbonsäure, Amin) eine Kohlenwasserstoff-Gruppe mit 12-24 C-Atomen, die gesättigt oder ungesättigt, linear oder verzweigt sein kann, ist, R' ein Wasserstoff, eine Kohlenwasserstoff-Gruppe mit 1 bis 4 C-Atomen oder eine Benzyl-Gruppe ist, oder eine Mischung der Verbindungen mit der allgemeinen Struktur (I) und/oder (II) mit einem ethoxylierten Amin mit der allgemeinen Struktur (III), wobei R" eine Kohlenwasserstoffgruppe mit 8-22 C-Atomen, die gesättigt oder ungesättigt, linear oder verzweigt sein kann, ist und a und b 2 bis 50 sind.

Bei der erfindungsgemäßen Schmierstoffzusammensetzung und der erfindungsgemäßen Verwendung der Schmierstoffzusammensetzung wurde überraschend festgestellt, dass hervorragende Eigenschaften als Getriebeöl zur Verminderung von Reibschwingungen gegeben sind.

Diese Eigenschaften sind insbesondere beim Einsatz in Differentialgetrieben so vorteilhaft, dass durch das Differentialgetriebe keinerlei Geräusche auftreten. Gleichzeitig wird eine sehr gute Schmierfähigkeit von Verzahnungen gewährleistet und es werden ausreichend hohe Reibwerte in Synchronisierungen der Getriebe sichergestellt.

In einer besonders bevorzugten Ausführungsvariante umfasst die Schmierstoffzusammensetzung ein synthetisches Grundöl, das ausgewählt ist, aus einem Hydrocrack-ÖI nach Gruppe III und/oder einem Polyalphaolefin nach Gruppe IV gemäß der Klassifikation des American Petroleum Institute (API) (siehe unten) und neben den Schwefelverbindungen gemäß den Strukturen I und II eine Phosphorverbindung enthält.

Eine kinematische Viskosität der Zusammensetzung beträgt bei 100 °C vorzugsweise 3,0 bis 18,0 mm²/s (Centistokes), besonders bevorzugt 4,0 bis 10,0 mm²/s. Viskositäten in den genannten Bereichen sind besonders für Schmierungen von Schaltgerieben geeignet.

Als Grundöl der erfindungsgemäßen Schmierstoffzusammensetzung können Mineralöle, teilsynthetische oder synthetische Öle oder natürliche Öle eingesetzt werden, oder Mischungen von diesen. Das Grundöl ist insbesondere aus einem der Grundöle in den Gruppen I bis V, wie sie in den American Petroleum Institute (API) "Base Oil Interchangeability Guidelines" spezifiziert sind, ebenso wie aus Gas-to-Liquid-Grundölen ausgewählt. Die API-Grundölgruppen Gruppe I bis V sind in folgender Tabelle dargestellt.

| Grundölgruppe¹ | Schwefel (Gew.-%)² | und/oder | Gesättigte Kohlenwasserstoffe (Gew.-%)³ | Viskositätsindex⁴ |
|---|---|---|---|---|
| Gruppe I | > 0,03 | und/oder | < 90 | ≥ 80 bis < 120 |
| Gruppe II | ≤ 0,03 | und | ≥ 90 | ≥ 80 bis < 120 |
| Gruppe III | ≤ 0,03 | und | ≥ 90 | ≥ 120 |
| Gruppe IV | alle Polyalphaolefine (PAOs) | | | |
| Gruppe V | alle anderen, die nicht in den Gruppen I bis IV eingeschlossen sind | | | |

| | | | | |
|---|---|---|---|---|
| ¹Die Gruppen I bis III sind mineralische Ölgrundmaterialien. ²ASTM D1552, ASTM D2622, ASTM D3120, ASTM D4294 oder ASTM D4927. ³ASTM D2007 ⁴ASTM D2270 | | | | |

Besonders bevorzugt ist das Grundöl ausgewählt aus einem Hydrocrack-Öl nach Gruppe III oder einem PAO nach Gruppe IV.

Die erfindungsgemäße Schmierstoffzusammensetzung kann auf das Grundöl abgestimmte Additive enthalten. Diese umfassen unter anderem Fließverbesserer (Viskositätsindexverbesserer), Verschleißschutzzusätze, Antioxidantien, Metall-Desaktivatoren, Rost-Inhibitoren, Dispergiermittel, Reibungsveränderer (Friction Modifier), Schauminhibitoren und Detergentien.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend von Beispielen näher erläutert.

### Beispiel

Prüfung des Reibschwingungsverhalten (stick-slip) einer erfindungsgemäßen Schmierstoffzusammensetzung im Differentialgetriebe, insbesondere im tribologischen Kontakt des Anlaufscheibenverbundes zum Kegelrad (Gleitlagerung)

Zur Abschätzung des Geräuschverhaltens eines Getriebes unter Verwendung der erfindungsgemäßen Schmierstoffzusammensetzung und Schmierstoffzusammensetzung nach dem Stand der Technik wird ein elektromotorischer Prüfstand verwendet, der eine horizontale Anordnung der Antriebwelle erlaubt. Durch die horizontale Bauteilanordnung, analog zur Fahrzeugeinbaulage, ist eine vergleichbare Beölungssituation sichergestellt.

Die Drehzahl sowie Temperatur sind in den Bereichen 0 bis 1000 min⁻¹ und Raumtemperatur bis 100 °C frei wählbar.

Die auftretende schmierstoffzusammensetzungsabhängige Schwingungsintensität des Prüfaufbaus wird mittels Beschleunigungssensor bei einer Messfrequenz von 1000 Hz aufgezeichnet und bewertet.

Das Ausgleichgehäuse ist durch eine Aufnahme mit dem Antrieb des Prüfstands verbunden. Einer der Wellenflansche ist mittels einer Antriebswelle verdrehsicher am Prüfaufbau / Resonator fixiert. Der zweite Wellenflansch kann frei rotieren. In dem temperierbaren Prüfbehälter werden ca. drei Liter der zu prüfenden Schmierstoffzusammensetzung eingefüllt. Die jeweilige Prüftemperatur wird eingestellt. Nach einer ausreichenden Temperierphase wird der Prüfstand gestartet und es beginnt der rechnergesteuerte Prüflauf bei gleichzeitiger Aufzeichnung der entstehenden Schwingungen des Prüfaufbaus.

Die Prüfungen werden alle bei einer identischen Temperatur durchgeführt. Die Drehzahl wird während der Prüfung von 0 U/min auf ca. 20 U/min gesteigert und wieder auf 0 U/min zurückgeführt. Die dabei auftretende Schwingungsintensität des Prüfaufbaus wird anhand der Beschleunigung dargestellt, wobei ein symmetrisches Schwingungsmuster erhalten wird. Eine Beschleunigung von ± 0,1 g ist nicht mehr tolerabel, d. h. es ist keine ausreichende Reduzierung der Schwingungen gegeben.

Die Prüfergebnisse sind in den Figuren 1 bis 14 dargestellt, wobei festzustellen ist, dass alle Prüfergebnisse der erfindungsgemäßen Schmierstoffzusammensetzungen eine deutlich geringere Beschleunigung als ± 0,1 g bewirken.
Figur 1 betrifft ein erstes Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,5 Gew.-%,
Figur 2 betrifft ein zweites Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,5 Gew.-%,
Figur 3 betrifft ein drittes Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,5 Gew.-%,
Figur 4 betrifft ein erstes Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,4 Gew.-%,
Figur 5 betrifft ein zweites Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,4 Gew.-%,
Figur 6 betrifft ein Beispiel einer erfindungsgemäße Schmierstoffzusammensetzung mit einer Verbindung mit der allgemeinen Struktur (I), nämlich Armolube® 211, N-(Oleyl alkyl)-1,3-propandiamin-oleat in einer Konzentration von 0,3 Gew.-%,
Figur 7 betrifft ein Beispiel einer erfindungsgemäße Schmierstoffzusammensetzung mit einer Verbindung mit der allgemeinen Struktur (II), nämlich Armolube® 312, Talg dipropylentriamin-oleat in einer Konzentration von 0,5 Gew.-%,
Figur 8 betrifft ein Beispiel einer erfindungsgemäße Schmierstoffzusammensetzung mit einer Verbindung mit der allgemeinen Struktur (I) und einer Verbindung mit der allgemeinen Struktur (III), nämlich Armolube® 211, N-(Oleyl alkyl)-1,3-propandiamin-oleat (0,5 Gew.-%) und Ethomeen® T12, Bis (2-hydroxylethyl) Talgamin (0,2 Gew.-%),
Figur 9 betrifft ein Beispiel einer erfindungsgemäße Schmierstoffzusammensetzung mit einer Verbindung mit der allgemeinen Struktur (I) und einer Verbindung mit der allgemeinen Struktur (III), nämlich Armolube® 211, N-(Oleyl alkyl)-1,3-propandiamin-oleat (0,2 Gew.-%) und Ethomeen® T12, Bis (2-hydroxylethyl) Talgamin (0,4 Gew.-%),
Figur 10 betrifft eine Schmierstoffzusammensetzung mit einer Verbindung mit der allgemeinen Struktur (III), nämlich Ethomeen T12, Bis (2-hydroxylethyl) Talgamin in einer Konzentration von 0,5 Gew.-%,
Figur 11 betrifft eine Schmierstoffzusammensetzung mit einer Verbindung mit der allgemeinen Struktur (III), nämlich Ethomeen® T12, Bis (2-hydroxylethyl) Talgamin in einer Konzentration von 0,4 Gew.-%,
Figur 12 betrifft eine Schmierstoffzusammensetzung mit einem Additiv nach dem Stand der Technik Duomeen® TDO in einer Konzentration von 0,5 Gew.%,
Figur 13 betrifft eine Schmierstoffzusammensetzung mit einer Verbindung mit der allgemeinen Struktur (III), nämlich Ethomeen® T12, Bis (2-hydroxylethyl) Talgamin (0,3 Gew.-%) und Duomeen® T (0,5 Gew.-%) nach dem Stand der Technik und
Figur 14 betrifft eine Schmierstoffzusammensetzung mit einer Verbindung mit der allgemeinen Struktur (III),nämlich Ethomeen® T12, Bis (2-hydroxylethyl) Talgamin (0,3 Gew.-%), Duomeen® T (0,3 Gew.-%) und mit einer Verbindung mit der allgemeinen Struktur (I) Armolube® 211 (0,2 Gew.-%). Die Figuren 8-9, 14 sind erfindungsgemäß für den Schmierstoff und dessen Verwendung. Die Figuren 1-7 sind erfindungsgemäß nur für die Verwendung des Schmierstoffs.

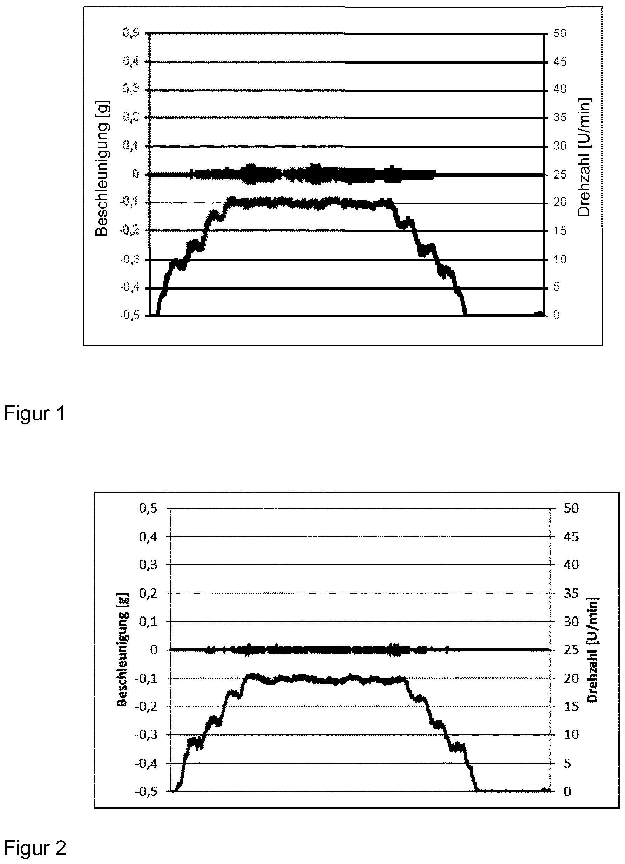

Aus Figur 1 ist ersichtlich, dass mit einer erfindungsgemäßen Schmierstoffzusammensetzung, die N-(Oleyl alkyl)-1,3-propandiamin-oleat (Armolube® 211) in einer Konzentration von 0,5 Gew.-% als Verbindung mit der allgemeinen Struktur (I) enthält, während des Prüflaufs nahezu keine Störgeräusche bzw. Schwingungen gegeben waren.

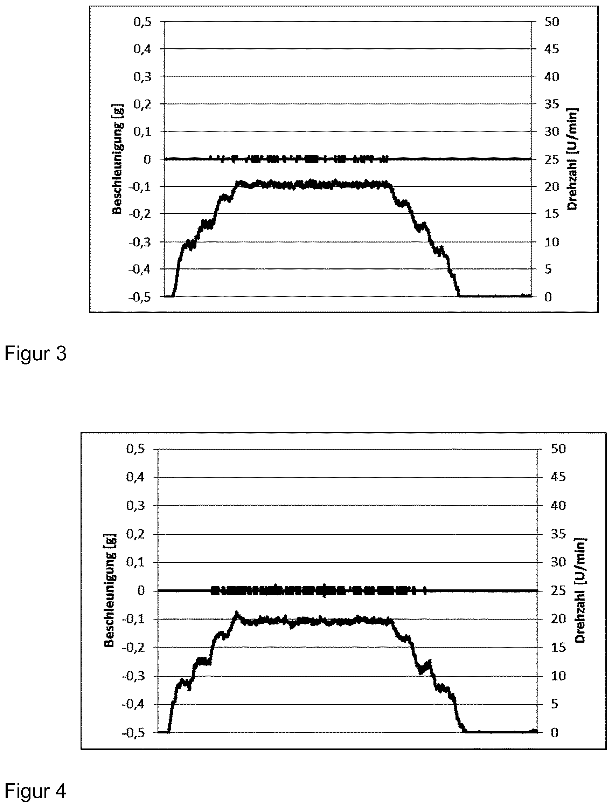

Figur 2 und Figur 3 entsprechen der Prüfung gemäß Figur 1 mit identischen Verbindungen und Konzentrationen, wobei sich ein im Wesentlichen gleiches Schwingungsbild ergibt.

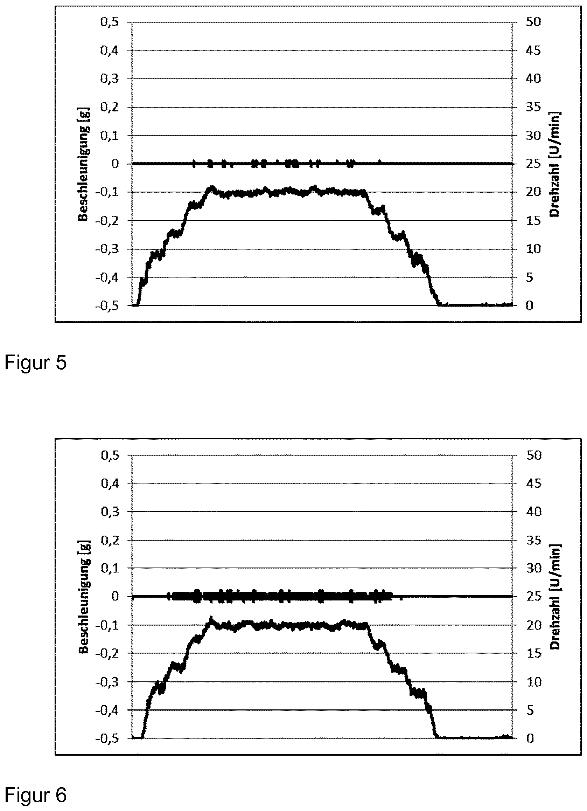

Das gleiche gilt für die Prüfungen mit derselben Verbindung N-(Oleyl alkyl)-1,3-propandiamin-oleat (Armolube® 211) mit der allgemeinen Struktur (I) in einer Konzentration von 0,4 Gew.-% (Figur 4 und Figur 5) und in einer Konzentration 0,3 Gew.-% (Figur 6).

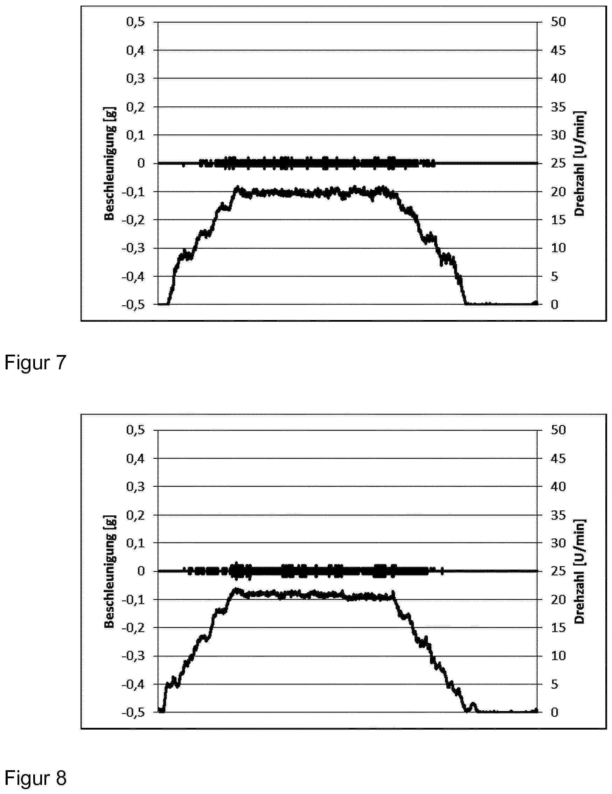

Figur 7 betrifft ein Beispiel einer erfindungsgemäße Schmierstoffzusammensetzung mit einer Verbindung mit der allgemeinen Struktur (II), Talg dipropylentriamin-oleat (Armolube® 312) in einer Konzentration von 0,5 Gew.-%, bei dem sich ein ähnliches Schwingungsbild wie bei den vorgenannten Figuren ergibt.

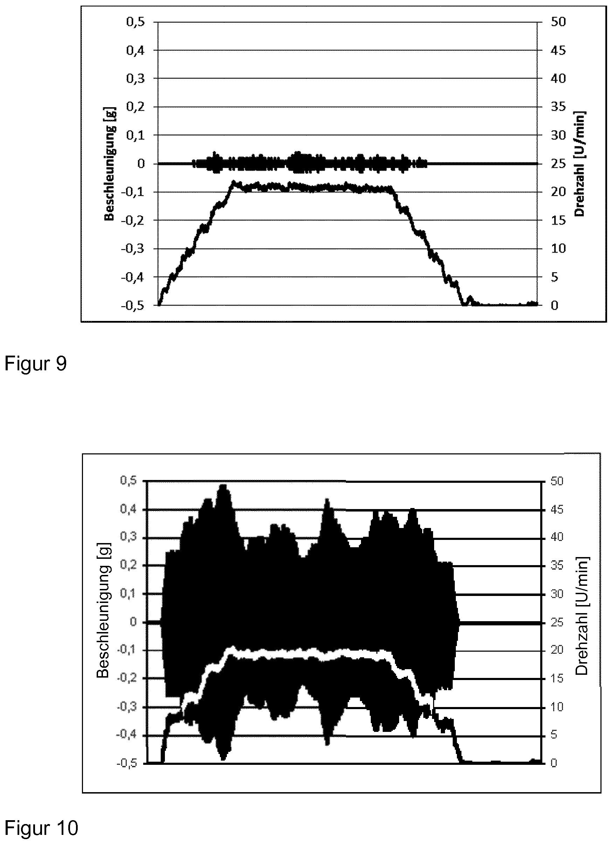

Figur 8 und Figur 9 zeigen vorteilhafte Prüfungsergebnisse erfindungsgemäßer Schmierstoffzusammensetzungen mit einer Verbindung mit der allgemeinen Struktur (I) N-(Oleyl alkyl)-1,3-propandiamin-oleat (Armolube® 211) in Konzentrationen von 0,5 Gew.-% bzw. 0,2 Gew.-% und einer Verbindung mit der allgemeinen Struktur (III) Bis (2-hydroxylethyl) Talgamin (Ethomeen® T12) in Konzentrationen von 0,2 Gew.-% bzw. 0,4 Gew.-%.

Aus Figur 10 ist zu entnehmen, dass eine Schmierstoffzusammensetzung, die lediglich mit einer Verbindung mit der allgemeinen Struktur (III) Bis (2-hydroxylethyl) Talgamin (Ethomeen® T12) in einer Konzentration von 0,5 Gew.-% versehen ist, nicht in der Lage ist, die Schwingungen in gewünschter Weise zu reduzieren.

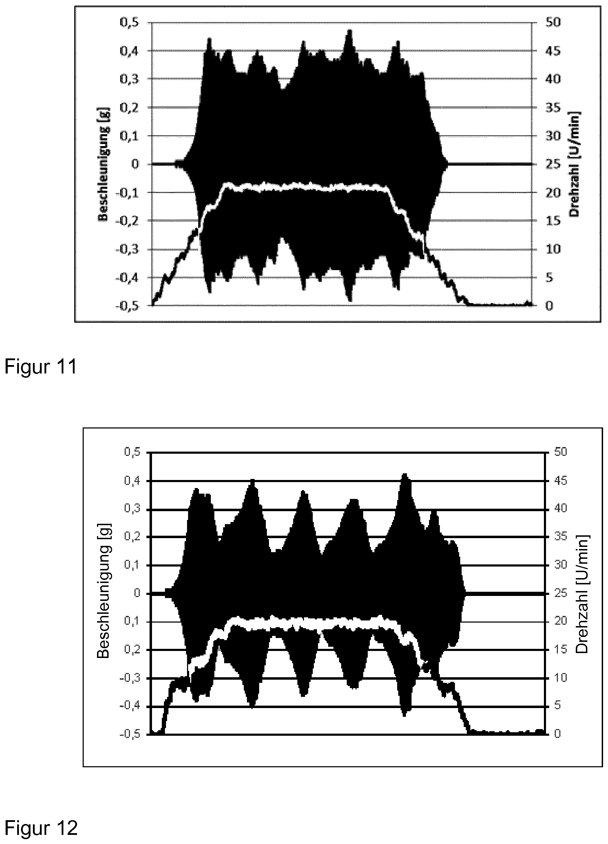

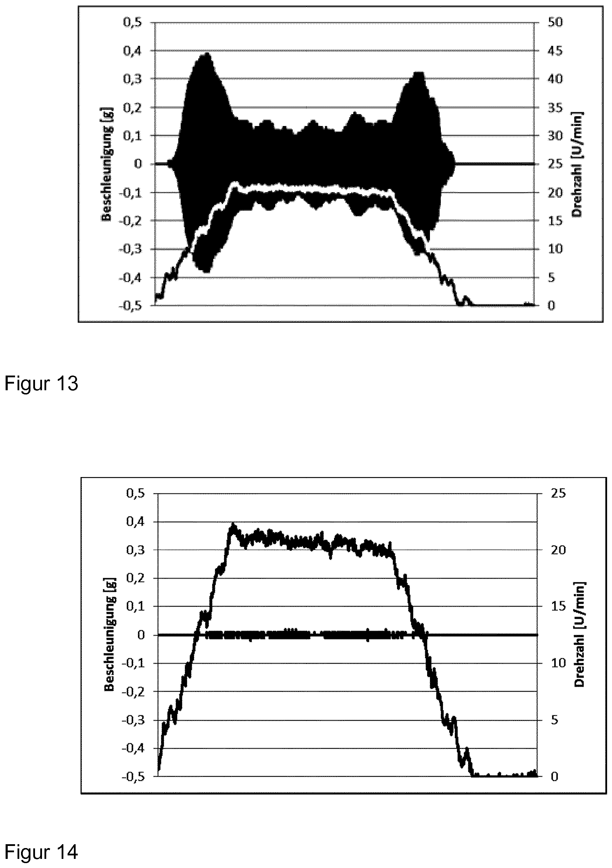

Dies gilt gleichfalls für die Prüfergebnisse gemäß Figur 11 mit Bis (2-hydroxylethyl) Talgamin (Ethomeen® T12) in einer Konzentration von 0,4 Gew.-%, Figur 12 Duomeen® TDO in einer Konzentration von 0,5 Gew.-%, Stand der Technik, und Figur 13 Bis (2-hydroxylethyl) Talgamin, (Ethomeen® T12) in einer Konzentration von 0,3 Gew.-% und Duomeen® T in einer Konzentration von 0,5 Gew.-%, Stand der Technik.

Hingegen kann gemäß Figur 14 gezeigt werden, dass eine Schmierstoffzusammensetzung mit Bis (2-hydroxylethyl) Talgamin (Ethomeen® T12) in einer Konzentration von 0,3 Gew.-%, Duomeen® T in einer Konzentration von 0,3 Gew.-% und N-(Oleyl alkyl)-1,3-propandiamin-oleat (Armolube® 211) in einer Konzentration von 0,2 Gew.-%, also bei einer Zusammensetzung gemäß Figur 13 unter Zugabe von Armolube® 211 sich wieder der vorteilhafte Effekt der Schwingungsreduktion einstellt.

## Patentansprüche

1. Schmierstoffzusammensetzung umfassend ein Grundöl und ein Diaminalkanmonosalz mit der allgemeinen Struktur (I) 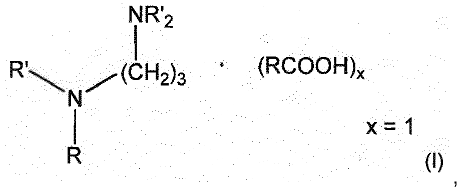
wobei R (Carbonsäure, Amin) eine ungesättigte Kohlenwasserstoff-Gruppe mit 16-24 C-Atomen ist, und
R' ein Wasserstoff, eine Kohlenwasserstoff-Gruppe mit 1 bis 4 C-Atomen oder eine Benzyl-Gruppe ist,
und/oder ein Triaminalkanmonosalz oder -disalz mit der allgemeinen Struktur (II) 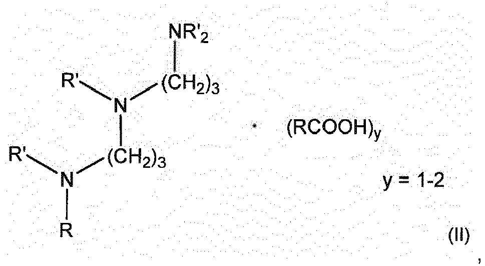
wobei R (Carbonsäure, Amin) eine Kohlenwasserstoff-Gruppe mit 12-24 C-Atomen, die gesättigt oder ungesättigt, linear oder verzweigt sein kann, ist, und
R' ein Wasserstoff, eine Kohlenwasserstoff-Gruppe mit 1 bis 4 C-Atomen oder eine Benzyl-Gruppe ist,
und ein ethoxyliertes Amin mit der allgemeinen Struktur (III), 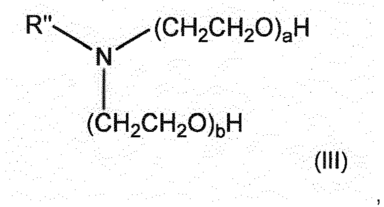
wobei R" eine Kohlenwasserstoffgruppe mit 8 bis 22 C-Atomen, die gesättigt oder ungesättigt, linear oder verzweigt sein kann, ist und
a und b 2 bis 50 sind,
wobei die Verbindung mit der allgemeinen Struktur (I) und/oder (II) 0,1 bis 0,5 Gew.% und die Verbindung mit der allgemeinen Struktur (III) 0,1 bis 0,5 Gew.% der Schmierstoffzusammensetzung aufweisen.

2. Schmierstoffzusammensetzung nach Anspruch 1, **dadurch gekennzeichnet, dass** R der Verbindung mit der allgemeinen Struktur (II) eine ungesättigte Kohlenwasserstoffgruppe mit 16 bis 24 C-Atomen ist.

3. Schmierstoffzusammensetzung nach Anspruch 1 oder 2, **dadurch gekennzeichnet, dass** das Diaminalkanmonosalz mit der allgemeinen Struktur (I) N-(oleyl alkyl)-1,3-propandiamin-oleat ist.

4. Schmierstoffzusammensetzung nach einem der Ansprüche 1 bis 3, **dadurch gekennzeichnet, dass** das Triaminalkanmonosalz oder -disalz mit der allgemeinen Struktur (II) Talgdipropylentriaminoleat ist

5. Schmierstoffzusammensetzung nach einem der Ansprüche 1 bis 3, **dadurch gekennzeichnet, dass** das ethoxlierte Amin mit der allgemeinen Struktur (III) Bis(2-hydroxylethyl) Talgamin ist.

6. Schmierstoffzusammensetzung nach einem der Ansprüche 1 bis 5, **dadurch gekennzeichnet, dass** a und b jeweils 1 ist.

7. Verwendung einer Schmierstoffzusammensetzung zur Schmierung eines Differentialgetriebes, umfassend ein Grundöl und ein Diaminalkanmonosalz mit der allgemeinen Struktur (I) 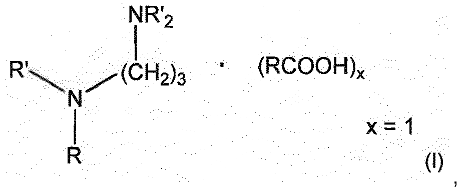
wobei R (Carbonsäure, Amin) eine Kohlenwasserstoff-Gruppe mit 12-24 C-Atomen, die gesättigt oder ungesättigt, linear oder verzweigt sein kann, sein kann und
R' ein Wasserstoff, eine Kohlenwasserstoff-Gruppe mit 1 bis 4 C-Atomen oder eine Benzyl-Gruppe ist,
und/oder ein Triaminalkanmonosalz oder -disalz mit der allgemeinen Struktur (II) 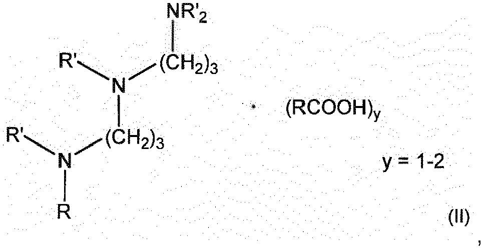
wobei R (Carbonsäure, Amin) eine Kohlenwasserstoff-Gruppe mit 12 bis 24 C-Atomen, die gesättigt oder ungesättigt, linear oder verzweigt sein kann, ist und
R' ein Wasserstoff, eine Kohlenwasserstoff-Gruppe mit 1 bis 4 C-Atomen oder eine Benzyl-Gruppe ist,
oder eine Mischung der Verbindungen mit der allgemeinen Struktur (I) und/oder (II) mit einem ethoxylierten Amin mit der allgemeinen Struktur (III), 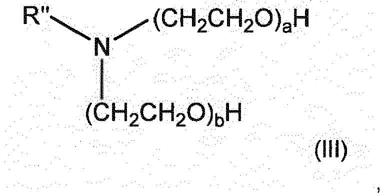
wobei R" eine Kohlenwasserstoffgruppe mit 8 bis 22 C-Atomen, die gesättigt oder ungesättigt, linear oder verzweigt sein kann, ist und
a und b 2 bis 50 sind.

## Claims

1. Lubricant composition comprising a base oil and a diaminoalkane monosalt having the general structure (I) 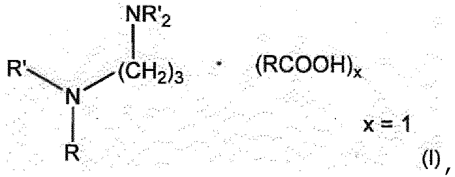
where R (carboxylic acid, amine) is an unsaturated hydrocarbon group having 16-24 carbon atoms, and
R' is a hydrogen, a hydrocarbon group having 1 to 4 carbon atoms or a benzyl group,
and/or a triaminoalkane monosalt or disalt having the general structure (II) 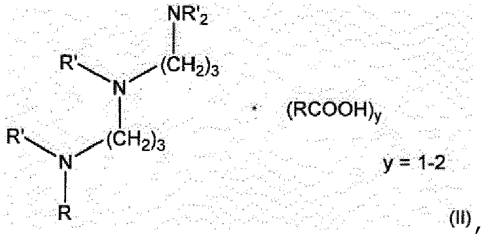
where R (carboxylic acid, amine) is a hydrocarbon group having 12-24 carbon atoms, which can be saturated or unsaturated, linear or branched, and
R' is a hydrogen, a hydrocarbon group having 1 to 4 carbon atoms or a benzyl group,
and an ethoxylated amine having the general structure (III) 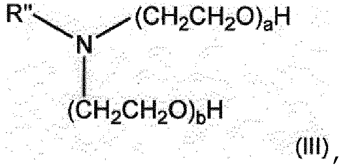
where R" is a hydrocarbon group having 8-22 carbon atoms, which can be saturated or unsaturated, linear or branched, and
a and b are 2 to 50,
wherein the compound having the general structure (I) and/or (II) comprises 0.1 to 0.5% by weight, and the compound having the general structure (III) comprises 0.1 to 0.5% by weight, of the lubricant composition.

2. Lubricant composition according to Claim 1, **characterized in that** R in the compound having the general structure (II) is an unsaturated hydrocarbon group having 16 to 24 carbon atoms.

3. Lubricant composition according to Claim 1 or 2, **characterized in that** the diaminoalkane monosalt having the general structure (I) is N-(oleylalkyl)-1,3-propanediamine oleate.

4. Lubricant composition according to any of Claims 1 to 3, **characterized in that** the triaminoalkane monosalt or disalt having the general structure (II) is tallow dipropylenetriamine oleate.

5. Lubricant composition according to any of Claims 1 to 3, **characterized in that** the ethoxylated amine having the general structure (III) is bis(2-hydroxyethyl) tallow amine.

6. Lubricant composition according to any of Claims 1 to 5, **characterized in that** a and b are both 1.

7. Use of a lubricant composition for lubricating a differential transmission, comprising a base oil and a diaminoalkane monosalt having the general structure (I) 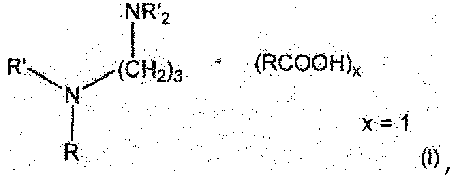
where R (carboxylic acid, amine) is a hydrocarbon group having 12-24 carbon atoms, which can be saturated or unsaturated, linear or branched, and
R' is a hydrogen, a hydrocarbon group having 1 to 4 carbon atoms or a benzyl group,
and/or a triaminoalkane monosalt or disalt having the general structure (II) 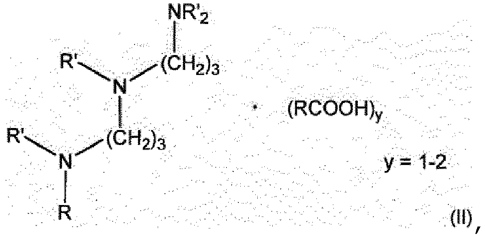
where R (carboxylic acid, amine) is a hydrocarbon group having 12-24 carbon atoms, which can be saturated or unsaturated, linear or branched, and
R' is a hydrogen, a hydrocarbon group having 1 to 4 carbon atoms or a benzyl group,
or a mixture of compounds having the general structure (I) and/or (II) with an ethoxylated amine having the general structure (III) 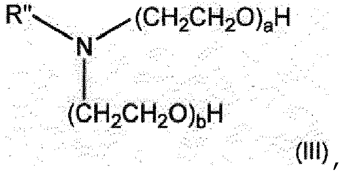
where R" is a hydrocarbon group having 8-22 carbon atoms, which can be saturated or unsaturated, linear or branched, and
a and b are 2 to 50.

## Revendications

1. Composition lubrifiante comprenant une huile de base et un sel simple de diaminoalcane doté de la structure générale (I) 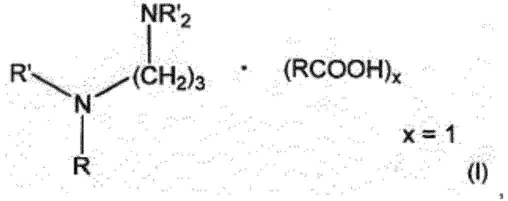
R (acide carboxylique, amine) étant un groupe hydrocarboné insaturé comportant 16 à 24 atomes de C, et
R' étant un hydrogène, un groupe hydrocarboné comportant 1 à 4 atomes de C ou un groupe benzyle,
et/ou un sel simple ou un sel double de triaminoalcane doté de la structure générale (II) 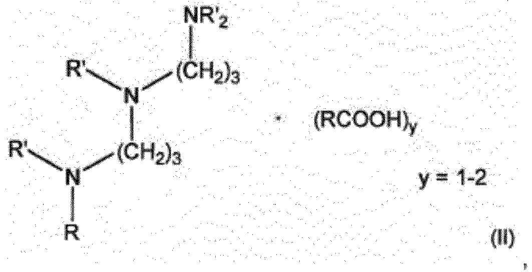
R (acide carboxylique, amine) étant un groupe hydrocarboné comportant 12 à 24 atomes de C, qui peut être saturé ou insaturé, linéaire ou ramifié, et
R' étant un hydrogène, un groupe hydrocarboné comportant 1 à 4 atomes de C ou un groupe benzyle,
et une amine éthoxylée dotée de la structure générale (III), 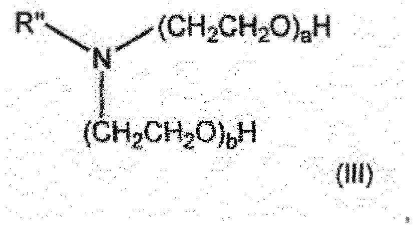
R" étant un groupe hydrocarboné comportant 8 à 22 atomes de C, qui peut être saturé ou insaturé, linéaire ou ramifié, et
a et b étant de 2 à 50,
le composé doté de la structure générale (I) et/ou (II) présentant 0,1 à 0,5 % en poids de la composition lubrifiante et le composé doté de la structure générale (III) présentant 0,1 à 0,5 % en poids de la composition lubrifiante.

2. Composition lubrifiante selon la revendication 1, **caractérisée en ce que** R du composé doté de la structure générale (II) est un groupe hydrocarboné insaturé comportant 16 à 24 atomes de C.

3. Composition lubrifiante selon la revendication 1 ou 2, **caractérisée en ce que** le sel simple de diaminoalcane doté de la structure générale (I) est un N(oléyle alkyle)-1,3-propanediamine-oléate.

4. Composition lubrifiante selon l'une quelconque des revendications 1 à 3, **caractérisé en ce que** le sel simple ou le sel double de triaminoalcane doté de la structure générale (II) est le dipropylènetriaminooléate de suif.

5. Composition lubrifiante selon l'une quelconque des revendications 1 à 3, **caractérisé en ce que** l'amine éthoxylée dotée de la structure générale (III) est la bis(2-hydroxyéthyl)-amine de suif.

6. Composition lubrifiante selon l'une quelconque des revendications 1 à 5, **caractérisée en ce que** a et b sont à chaque fois 1.

7. Utilisation d'une composition lubrifiante pour la lubrification d'un engrenage différentiel, comprenant une huile de base et un sel simple de diaminoalcane doté de la structure générale (I) 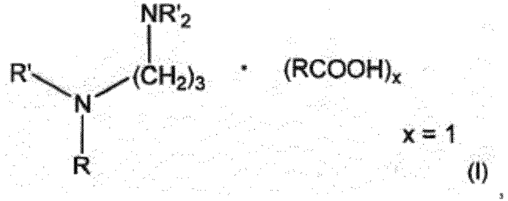
R (acide carboxylique, amine) pouvant être un groupe hydrocarboné comportant 12 à 24 atomes de C, qui peut être saturé ou insaturé, linéaire ou ramifié, et
R' étant un hydrogène, un groupe hydrocarboné comportant 1 à 4 atomes de C ou un groupe benzyle,
et/ou un sel simple ou un sel double de triaminoalcane doté de la structure générale (II) 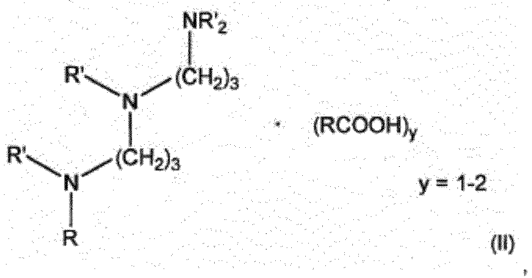
R (acide carboxylique, amine) étant un groupe hydrocarboné comportant 12 à 24 atomes de C, qui peut être saturé ou insaturé, linéaire ou ramifié, et
R' étant un hydrogène, un groupe hydrocarboné comportant 1 à 4 atomes de C ou un groupe benzyle,
ou un mélange des composés dotés de la structure générale (I) et/ou (II) avec une amine éthoxylée dotée de la structure générale (III), 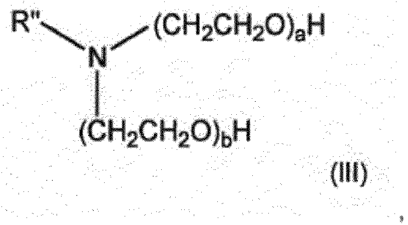
R" étant un groupe hydrocarboné comportant 8 à 22 atomes de C, qui peut être saturé ou insaturé, linéaire ou ramifié, et
a et b étant de 2 à 50.
